# EUROPEAN PATENT APPLICATION

(11) **EP 4 712 413 A1**
(43) Date of publication of application: **18.03.2026**
(21) Application number: 25202580.4
(22) Date of filing: 16.09.2025
(51) Int. Cl.: H04L 9/40, H04L 9/00, G06N 20/00, H04L 9/08

(54) **ENSURING HIGH SECURITY LEVEL FOR ACCESSING NETWORK RESOURCES**

(30) Priority: 16.09.2024 US 202418885852
(71) Applicant: CyberArk Software Ltd., 4951040 Petach-Tikva (IL)
(72) Inventor: DAYAN, Tomer, 4951040 Petach Tikva (IL); WAISBARD, Erez, 4951040 Petach Tikva (IL)
(74) Representative: Finnegan Europe LLP

(57) **Abstract**

Systems, methods, and apparatuses are disclosed for establishing secure access between network identities. Techniques may include receiving, from a first network identity, a request to access a second network identity and obtaining at least one security attribute. Techniques may further include determining, based on the at least one security attribute, a security level for a secure tunnel with a communication component located in a network associated with the second network identity, identifying, just-in-time and based on the security level, the secure tunnel with the communication component located in the network associated with the second network identity resource; and establishing a secure connection with the second network identity using the secure tunnel.

## Description

### BACKGROUND

### Technical Field

The present disclosure relates generally to cybersecurity, and more specifically, to techniques for establishing and facilitating secure access and communications between network identities.

### Background Information

Security of computer resources has long relied on data encryption or cryptography techniques. Such cryptography techniques include symmetric-key cryptography, public-key cryptography, cryptographic hash functions, and others. While these techniques have served to secure computer resources in a pre-quantum computing environment, the development of quantum computers, quantum computing techniques, and other accelerated processing technologies poses serious challenges to traditional methods of securing computer resources.

To address the challenges of a post-quantum computing world, cyber security specialists may employ quantum-resistant cryptographic techniques. Quantum-resistant cryptographic techniques may be far more secure than traditional cryptographic techniques in securing data and other computer resources These techniques may include quantum key distribution, quantum coin-flipping, position-based quantum cryptography, device-independent quantum cryptography, the Kek protocol, the Y-00 protocol, or others.

The TLS (Transport Layer Security) and SSL (Secure Sockets Layer) protocols are communication protocols used to encrypt data between a web server and users. TLS depends on a communication process known as a "handshake." A handshake refers to the part of the communication process between a web server and a user that establishes a secure connection and determines which type of encryption is used. This handshake involves several steps. In a first step, a client sends a message to a server with its supported TLS versions, cipher suites, and other settings. The server responds with its chosen TLS version, cipher suite, and its digital certificate. The client verifies the server's certificate with a trusted Certificate Authority (CA). Once the handshake is complete, both the client and server generate session keys. These keys are symmetric, meaning the same key is used for both encryption and decryption of the data transmitted during the session. With the session keys established, the client and server can securely exchange data.

TLS protocols allow a variety of cipher suites, including different security levels. New experimental versions of TLS also provide support for quantum-resistant cryptography. One problem is that standard TLS protocols employ the cryptographic cipher suite that is the strongest available that can be supported. But such static determinations of cryptographic levels or cipher suites are not ideal. And determinations of the strongest supported level may consider only portions of the network environment, resulting in the employment of strong cryptographic techniques used in a portion of the network environment and while another portion employs weak or no cryptographic techniques. In addition, quantum-resistant cryptographic techniques consume large amounts of computing resources and generate added costs to providers and customers.

Solutions are needed to secure network communication protocols in selecting cryptographic techniques in a post-quantum encryption computing environment. Solutions should include dynamic determination of appropriate cryptographic techniques made just-in-time, or at the time of the connection attempt. Dynamic determinations may be made based on a number of factors such as performance, certification, a desired security level for protecting data, business or financial considerations, and others. Such dynamic determinations improve network resources, reduce or minimize costs, improve computer functionality, and provide efficiency.

### SUMMARY

The disclosed embodiments describe computer readable media (e.g., non-transitory computer readable media), systems, and methods for establishing secure access between network identities. For example, in an embodiment, a non-transitory computer readable medium may include instructions that, when executed by at least one processor, cause the at least one processor to perform operations for establishing secure access between network identities. The operations may include receiving, from a first network identity, a request to access a second network identity and obtaining at least one security attribute associated with at least one of: the first network identity, the second network identity, a network environment associated with the first network identity, or a network environment associated with the second network identity. The operations may further include determining, based on the at least one security attribute, a security level for a secure tunnel with a communication component located in a network associated with the second network identity; identifying, just-in-time and based on the security level, the secure tunnel with the communication component located in the network associated with the second network identity resource; and establishing a secure connection with the second network identity using the secure tunnel.

According to a disclosed embodiment, identifying the secure tunnel may include generating the secure tunnel. In another embodiment, identifying the secure tunnel may include selecting a pre-existing secure tunnel.

According to a disclosed embodiment, the at least one security attribute may include at least one protocol cipher suite. In another embodiment, the at least one security attribute may include a compliance certificate. In yet another embodiment, the at least one security attribute may include a privilege level.

According to a disclosed embodiment, the determined security level may be a quantum-resistant security level. In an embodiment, determining the security level may include assessing one or more aspects associated with a recordability of a communication from the first network identity. In another embodiment, determining the security level may include assessing a connection path from the first network identity to the second network identity for security vulnerabilities.

According to a disclosed embodiment, determining the security level may include assessing a quantity of data associated with the request to access the second network identity. In another embodiment, determining the security level may include dynamically determining the security level using a machine learning model. In another embodiment, identifying the secure tunnel may be performed in accordance with a pre-defined policy.

According to another disclosed embodiment, a computer-implemented method for establishing secure access to computer network resources may include receiving, from a first network identity, a request to access a second network identity; and obtaining at least one security attribute associated with at least one of: the first network identity, the second network identity, a network environment associated with the first network identity, or a network environment associated with the second network identity. The method may further include determining, based on the at least one security attribute, a security level for a secure tunnel with a communication component located in a network associated with the second network identity; identifying, just-in-time and based on the security level, the secure tunnel with the communication component located in the network associated with the second network identity resource; and establishing a secure connection with the second network identity using the secure tunnel.

According to a disclosed embodiment, the request to access the second network identity may be performed using one of a TCP connection or a UDP connection. In another embodiment, the second network identity may support post-quantum cryptography techniques, and the secure tunnel security level may be configured for classic cryptography. In yet another embodiment, the second network identity may be configured for classic cryptography techniques, and the secure tunnel security level may be configured for post-quantum cryptography.

According to a disclosed embodiment, the secure tunnel security level may be dynamically determined based on a network performance criterion. In another embodiment, the secure tunnel security level is dynamically determined based on one or more pre-defined terms associated with the first network identity.

According to a disclosed embodiment, one or more end point security parameters may include at least one of a protocol cipher suite, a compliance certificate, or a privilege level. In another embodiment, determining the security level may include dynamically determining the security level using a machine learning model.

Aspects of the disclosed embodiments may include tangible computer readable media that store software instructions that, when executed by one or more processors, are configured for and capable of performing and executing one or more of the methods, operations, and the like consistent with the disclosed embodiments. Also, aspects of the disclosed embodiments may be performed by one or more processors that are configured as special-purpose processor(s) based on software instructions that are programmed with logic and instructions that perform, when executed, one or more operations consistent with the disclosed embodiments.

It is to be understood that both the foregoing general description and the following detailed description are exemplary and explanatory only and are not restrictive of the disclosed embodiments.

### BRIEF DESCRIPTION OF THE DRAWINGS

The accompanying drawings, which are incorporated in and constitute a part of this specification, illustrate disclosed embodiments and, together with the description, explain the disclosed embodiments.
Fig. 1 is a block diagram of an exemplary system for establishing secure access between network identities in accordance with disclosed embodiments.
Fig. 2 is a block diagram showing an exemplary network security module in accordance with disclosed embodiments.
Fig. 3 is a diagram depicting an exemplary process for establishing secure access between network identities in accordance with disclosed embodiments.
Fig. 4 is a flowchart depicting an exemplary process for establishing secure access between network identities in accordance with disclosed embodiments.

### DETAILED DESCRIPTION

In the following detailed description, numerous specific details are set forth to provide a thorough understanding of the disclosed example embodiments. However, it will be understood by those skilled in the art that the principles of the example embodiments may be practiced without every specific detail. Well-known methods, procedures, and components have not been described in detail so as not to obscure the principles of the example embodiments. Unless explicitly stated, the example methods and processes described herein are not constrained to a particular order or sequence or constrained to a particular system configuration. Additionally, some of the described embodiments or elements thereof can occur or be performed simultaneously, at the same point in time, or concurrently.

The techniques for establishing secure access between network identities described herein overcome several technological problems related to security, efficiency, and functionality in the fields of cybersecurity, network security, and software management. In particular, the disclosed embodiments provide techniques for establishing secure access between network identities by assessing security attributes of various resources in a network and dynamically determining, just-in-time, a security level for the secure access. As would be understood by a skilled artisan, determining a security level for the secure access "just-in-time" means determining the security level at the time of the request for such secure access. As discussed above, other techniques may default to employing the strongest available security protocol without providing a fulsome assessment of the entire network security environment, supporting hardware, customer needs, or other factors.

The disclosed embodiments provide technical solutions to these and other problems arising from current techniques. For example, a secure tunnel may be generated dynamically, just-in-time, and based on a determined security level, thus tailoring the security level specifically to the needs of the specific access request at the time it is made, thus minimizing inefficient use of certain cryptographic levels that are not appropriate for the specific communication request. Disclosed techniques for establishing secure access between network identities may further be combined with security monitoring and/or enforcement programs. For these, and other reasons that will be apparent to those skilled in the art, the disclosed techniques provide improved security, performance, and efficiency over existing techniques.

Aspects of the present disclosure may include a computer process. A computer process may be code that is executable and can receive arguments to enable its execution. An example of a computer process may be an application program or application, but processes are not limited to application programs and may also include tasks related to the operation of an operating system, a virtual machine, a BIOS, firmware, or any other executable. An application program may be a computer program designed to carry out a specific task, other than one relating to the operation of the computer itself. Applications may typically be used by end-users, and may include word processing documents, productivity programs for generating presentations, worksheets, databases, charts, graphs, digital paintings, electronic music and digital video, banking or financial software, or any other application software.

Aspects of this disclosure include network communication protocols. Such protocols may include Secure Sockets Layer (SSL) / Transport Layer Security (TLS), Hypertext Transfer Protocol Secure (HTTPS), Internet Protocol Security (IPsec), Secure Shell (SSH), Secure/Multipurpose Internet Mail Extensions (S/MIME), Secure Hypertext Transfer Protocol (S-HTTP), and others. Though references to a specific protocol may be used herein, these references are illustrative. It will be apparent to one of skill in the art that disclosed techniques may be applied to a variety of communication protocols and techniques and are not limited to any one disclosed protocol or technique.

Reference will now be made in detail to the disclosed embodiments, examples of which are illustrated in the accompanying drawings.

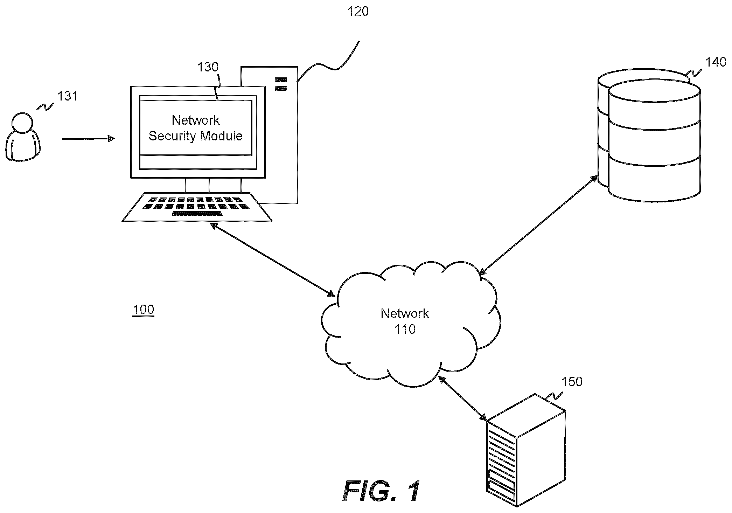

Fig. 1 illustrates an example system environment 100 for establishing secure access between network identities. System environment 100 may include one or more computing devices 120, one or more network security modules 130, one or more target resources 140, and one or more servers 150, as shown in Fig. 1. System environment 100 may represent a system or network environment in which secure access can be established between a network identity and a target resource or another network identity. In the example of system environment 100, secure access may be established between computing device 120 (or an entity associated with computing device 120, such as identity 131) and a target resource or other network identity located on a server within the network.

In some embodiments, a managed session may include a network-based session. For example, this may include an operation performed using computing device 120 involving a file or other data on a target resource stored on server 150. Alternatively, some or all of the managed session activity may occur locally. For example, the local computing operation may be an operation involving a file stored in computing device 120. Accordingly, while system environment 100 is shown in Fig. 1 to include target resource 140 and server 150 separately from computing device 120, by way of example, in some embodiments, one or both of target resource 140 and servers 150 may be integrated with computing device 120. For example, target resource 140 may be a local resource of computing device 120 and server 150 may be an agent or other process running on computing device 120. Accordingly, system environment 100 may not necessarily be a network-based system environment and may be a local environment of computing device 120.

The various components of system environment 100 may communicate over a network 110. Such communications may take place across various types of networks, such as the Internet, a wired Wide Area Network (WAN), a wired Local Area Network (LAN), a wireless WAN (e.g., WiMAX), a wireless LAN (e.g., IEEE 802.11, etc.), a mesh network, a mobile/cellular network, an enterprise or private data network, a storage area network, a virtual private network using a public network, a nearfield communications technique (e.g., Bluetooth^{™} infrared, etc.), or various other types of network communications. In some embodiments, the communications may take place across two or more of these forms of networks and protocols. While system environment 100 is shown as a network-based environment, it is understood that in some embodiments, one or more aspects of the disclosed systems and methods may also be used in a localized system, with one or more of the components communicating directly with each other.

As noted above, system environment 100 may include one or more computing devices 120. Computing device 120 may include any device that may be used for engaging in a managed session. Accordingly, computing device 120 may include various forms of computer-based devices, such as a workstation or personal computer (e.g., a desktop or laptop computer), a mobile device (e.g., a mobile phone or tablet), a wearable device (e.g., a smart watch, smart jewelry, implantable device, fitness tracker, smart clothing, head-mounted display, etc.), an IoT device (e.g., smart home devices, industrial devices, etc.), or any other device that may be capable of performing a privileged computing operation. In some embodiments, computing device 120 may be a virtual machine (e.g., based on AWS^{™}, Azure^{™}, IBM Cloud^{™}, etc.), container instance (e.g., Docker^{™} container, Java^{™} container, Windows Server^{™} container, etc.), or other virtualized instance.

In some embodiments, computing device 120 may be associated with a network identity 131. Network identity 131 may be any entity that may be associated with one or more privileges to be asserted to perform a privileged computing operation. For example, network identity 131 may be a user, an account, an application, a process, an operating system, a service, an electronic signature, or any other entity or attribute associated with one or more components of system environment 100. In some embodiments, network identity 131 may be associated with a user requesting to perform various operations through a managed session, which may include accessing data stored in target resource 140.

Target resource 140 may include any form of computing device with which a secure connection may be established. Examples of target resource 140 may include SQL servers, databases or data structures holding confidential information, restricted-use applications, operating system directory services, access-restricted cloud-computing resources (e.g., an AWS^{™} or Azure^{™} server), sensitive IoT equipment (e.g., physical access control devices, video surveillance equipment, etc.) and/or any other computer-based equipment or software that may be accessible over a network. Target resource 140 may include various other forms of computing devices, such as a mobile device (e.g., a mobile phone or tablet), a wearable device (a smart watch, smart jewelry, implantable device, fitness tracker, smart clothing, or head-mounted display, etc.), an IoT device (e.g., a network-connected appliance, vehicle, lighting, thermostat, room access controller, building entry controller, parking garage controller, sensor device, etc.), a gateway, switch, router, portable device, virtual machine, or any other device that may be subject to privileged computing operations. In some embodiments, target resource 140 may be a privileged resource, such that access to the network resource 140 may be limited or restricted. For example, access to the target resource 140 may require a secret (e.g., a password, a username, an SSH key, an asymmetric key, a symmetric key, a security or access token, a hash value, biometric data, personal data, etc.). In some embodiments target resource 140 may not necessarily be a separate device from computing device 120 and may be a local resource. Accordingly, target resource 140 may be a local hard drive, database, data structure, or other resource integrated with computing device 120.

System 100 may also comprise one or more server device(s) 150 in communication with network 110. Server device 150 may manage the various components in system 100. In some embodiments, server device 150 may be configured to process and manage requests between computing devices 120 and/or target resource 140. In embodiments where application code is accessed within system 100, server device 150 may manage various stages of the process, for example, by managing communications between computing devices 120 and target resource 140 over network 110. Server device 150 may identify application code in target resource 140, may receive updates when new or revised application code is entered in target resource 140, and may participate in securing the use of command line entries.

Network security module 130 may be any device, component, program, application, script, or the like, for securing access between network identities within system 100, as described in more detail below. Network security module 130 may be configured to monitor components within system 100, including computing device 120, and may communicate with target resource 140 or server 150. In some embodiments, network security module 130 may be implemented as a separate component within system 100, capable of assessing security attributes and identifying secure tunnels between network identities running within network 110. In other embodiments, network security module 130 may be a program or script and may be executed by another component of system 100 (e.g., integrated into computing device 130, target resource 140, server 150), or another component.

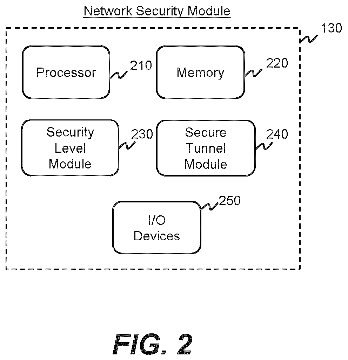

Network security module 130 may comprise additional elements to facilitate analysis of security attributes, determining security levels, identifying secure tunnels, or establishing secure connections within system 100. Fig. 2 is a block diagram showing an exemplary network security module 130 in accordance with disclosed embodiments. For example, network security module 130 may be a computing device and may include one or more dedicated processors 210 and/or memories 220. Processor (or processors) 210 may include one or more data or software processing devices. For example, the processor 210 may take the form of, but is not limited to, a microprocessor, embedded processor, or the like, or may be integrated in a system on a chip (SoC). Furthermore, according to some embodiments, the processor 210 may be from the family of processors manufactured by Intel^{®}, AMD^{®}, Qualcomm^{®}, Apple^{®}, NVIDIA^{®}, or the like. The processor 210 may also be based on the ARM architecture, a mobile processor, or a graphics processing unit, etc. In some embodiments, network security module 130 may be employed as a cloud service, such as a Software as a Service (SaaS) system, a Platform as a Service (PaaS), or Infrastructure as a Service (IaaS) system. For example, command line security invoker 120 may be based on infrastructure of services of Amazon Web Services^{™} (AWS^{™}), Microsoft Azure^{™}, Google Cloud Platform^{™}, Cisco Metapod^{™}, Joyent^{™}, vmWare^{™}, or other cloud computing providers. In an embodiment, network security module 130 may be integrated with a host that operates as a node in a cluster, for example, a Kubernetes^{™} node, and the node may further include software instance environments such as containers. In another embodiment, network security module 130 may be a container deployed on a node, or it may be deployed in a layer separate from software containers. In another embodiment, network security module 130 is a software application running on computing device 120.

Memory (or memories) 220 may include one or more storage devices configured to store instructions or data used by the processor 210 to perform functions related to the disclosed embodiments. Memory 220 may be configured to store software instructions, such as programs, that perform one or more operations when executed by the processor 210 to secure access between network identities, for example, using process 400, as described in detail below. The disclosed embodiments are not limited to software programs or devices configured to perform dedicated tasks. For example, the memory 220 may store a single program, such as a user-level application, which performs the functions of the disclosed embodiments or may comprise multiple software programs. Additionally, the processor 210 may in some embodiments execute one or more programs (or portions thereof) remotely located from the computing device 120. Furthermore, the memory 220 may include one or more storage devices configured to store data (e.g., machine learning data, training data, algorithms, etc.) for use by the programs, as discussed further below.

Network security module 130 may further comprise one or more components for performing various operations of the disclosed embodiments. For example, network security module 130 may contain security level module 230 and secure tunnel module 240. Security level module 230 may be configured to obtain one or more security attributes from a network identity or network environment and determine a security level for a secure tunnel. For example, security level module 230 may be configured to access and inspect network identity 131, computing device 120, target resource 140, or server 150 for certain security attributes. In some embodiments, secure tunnel module 240 may be configured to identify secure tunnel between one or more network identities or establish a secure connection with a network identity or target resource, such as target resource 140.

Network security module 130 may include one or more input/output (I/O) devices 250. I/O devices 250 may include one or more network adaptors or communication devices and/or interfaces (e.g., Wi-Fi, Bluetooth^{®}, RFID, NFC, RF, infrared, Ethernet, etc.) to communicate with other machines and devices, such as with other components of system 100 through network 110. For example, network security module 130 may use a network adaptor to identify applications stored within system 100. In some embodiments, the I/O devices 250 may also comprise a touchscreen configured to allow a user to interact with security level module 230 and/or an associated computing device. The I/O devices 250 may comprise a keyboard, mouse, trackball, touch pad, stylus, and the like. Like processor 210 and memory 220, in embodiments where command line security invoker 120 is executed as software or code, I/O devices 250 may be associated with another component of system 100.

Aspects of the present disclosure include establishing secure access between network identities. Establishing secure access between network identities may refer to any method or technique to provide an exchange of data between network identities over a network that protects the data or maintains privacy using a form of data encryption. For example, establishing secure access between network identities may include employing an encryption protocol such as SSL/TLS or WPA3, or the like. In other embodiments, establishing secure access between network identities may include establishing virtual private networks, firewalls, private or public key infrastructure, or other access controls to transmit data exchanged between two or more network identities.

Aspects of the present disclosure include network environments. A network environment may include any digital ecosystem that allows devices and users to communicate and share data. A network environment may encompass the infrastructure that enables the transmission and reception of information across a network. For example, a network environment may include networks such as a LAN (Local Area Network), a WAN (Wide Area Network), a MAN (Metropolitan Area Network), a PAN (Personal Area Network), a mesh network, a mobile/cellular network, an enterprise or private data network, a storage area network, a virtual private network using a public network, a nearfield communications technique (e.g., Bluetooth^{™}, infrared, etc.), or various other types of network communications. An example network environment may include network 110.

Aspects of the present disclosure may include secure tunnels. A secure tunnel may be an encrypted or other type of a secure connection that allows data to travel safely between two points over a network, such as the internet. An example of a secure tunnel includes Virtual Private Networks (VPNs), though other types of secure tunnels may also be used. More generally, a secure tunnel may refer to a process where data is encrypted from a network identity, encapsulated into a packet and transmitted from one network environment to another network environment, and decrypted at the destination.

A secure tunnel may have a security level. A security level may be one of two types: classic cryptography or post-quantum (quantum resistant) cryptography. Classic cryptography techniques include symmetric-key cryptography, public-key cryptography, cryptographic hash functions, and others. Post-quantum or quantum resistant cryptography may refer to cryptographic techniques designed to be secure against the potential threats posed by quantum computers. For example, post-quantum cryptography may include lattice-based cryptography, hash-based cryptography, code-based cryptography, multivariate polynomial cryptography, isogeny-based cryptography, or other techniques which are resistant to quantum attacks, such as quantum key distribution, quantum coin-flipping, position-based quantum cryptography, device-independent quantum cryptography, the Kek protocol, the Y-00 protocol, or others.

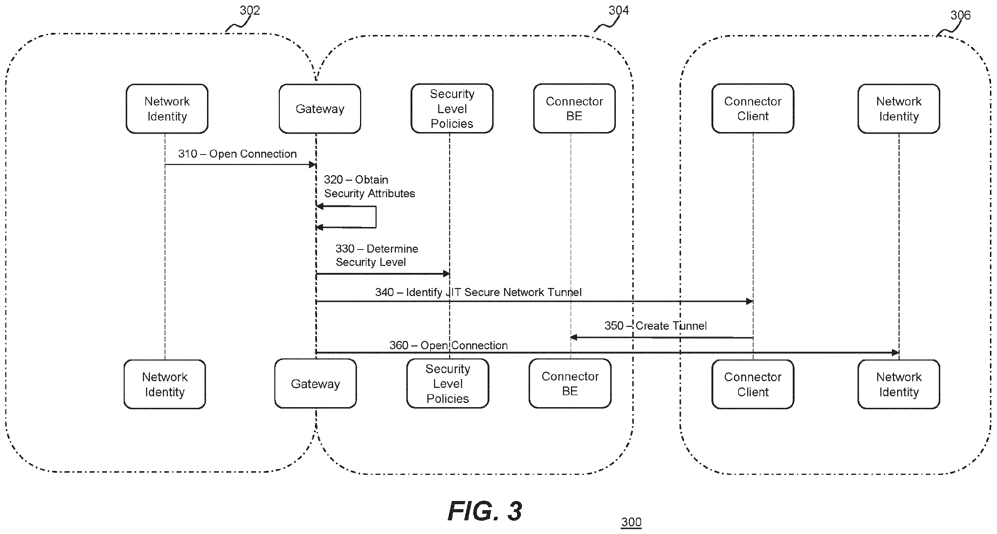

Fig. 3 is a diagram depicting an exemplary process 300 for establishing secure access between network identities in accordance with disclosed embodiments. In this example process, there may be a first network identity located in a first network environment 302 and a second network identity located in a second network environment 306. There may be an intermediate network environment 304. Intermediate network environment 304 may include gateways, connectors, routers, switches, firewalls, load balancers, access points, VPN concentrators, proxy servers, or other components to facilitate establishing secure connections between network identities. In one embodiment, intermediate network environment 304 may include computing device 120 operating network security module 130.

Aspects of the present disclosure may include receiving, from a first network identity, a request to access a second network identity. The request may be, for example, a request to open a connection as shown in step 310 of process 300. In an embodiment, the request to open a connection may be sent from the first network identity to a gateway bridging the first network environment 302 and the intermediate network environment 304. The request to access a second network identity may include, for example, a DNS lookup, a TCP handshake, a TLS/SSL handshake, an HTTP request, or other form of connection request. In an embodiment, the request to access the second network identity is performed using one of a TCP (Transmission Control Protocol) connection or a UDP (User Datagram Protocol) connection.

Aspects of the present disclosure may include obtaining at least one security attribute associated with at least one of a network identity or a network environment. A security attribute may refer to a security property of a network identity or a network environment. For example, a security attribute may include a protocol cipher suite. A protocol cipher suite may include a set of cryptographic algorithms used to secure network communications, for example as typically used in protocols like TLS and SSL. In an embodiment, the protocol cipher suite may include a key exchange algorithm, such as RSA or Diffie-Hellman, a bulk encryption algorithm, like AES or 3DES, a Message Authentication Code (MAC) algorithm, a pseudorandom function (PRF), or any combination of one or more of similar algorithms. In another embodiment, a security attribute may include a compliance certificate. A compliance certificate may be any certification that verifies a network's adherence to specific security and operational standards. For example, a compliance certificate may include a Public Services Network (PSN) compliance certificate, Federal Risk and Authorization Management Program (FedRAMP) compliance, StateRAMP, Federal Information Security Management Act compliance (FISMA), Service Organization Control 2 (SOC 2), Payment Card Industry Data Security Standard (PCI DSS), or any other compliance certificate. In another embodiment, a security attribute may include a privilege level. A privilege level may refer to a level of security control assigned to a user or a network identity. For example, a privilege level of "privileged" or "non-privileged" may be assigned to a network identity based on a number of factors, such as whether the network identity contains known confidential information, subscribes to a level of higher protection, is in a defined privileged group (e.g., based on an Active Directory^{™} grouping, or the like), or is otherwise determined by a user. A security attribute may be associated with a network identity, or it may be associated with a network environment of the network identity. Such attributes may be applied by security administrators. Alternatively, in some embodiments machine learning or artificial intelligence techniques may be used to determine such attributes. For example, by monitoring users' access to privileged resources, or obtaining privileged credentials, machine learning or artificial intelligence techniques may ascertain which identities are privileged.

At step 320, process 300 may include obtaining security attributes. Security attributes may be obtained from any network identity, or any network environment associated with a network identity. In an embodiment, a security attribute from the first network identity located in network environment 302 may be obtained. Additionally or alternatively, a security attribute from the second network identity located in network environment 306 may be obtained. In yet another embodiment, a security attribute from network environment 304 may be obtained. As will be apparent to one of skill in the art, a security attribute may be obtained from any network identity, computing device, server, database, or network environment.

Aspects of the present disclosure may include determining, based on the at least one security attribute, a security level for a secure tunnel. The secure tunnel may be in communication with a communication component located in a network associated with a second network identity. Determining a security level for a secure tunnel may be based on one or more security level policies. A security level may be, in some embodiments, a quantum-resistant or otherwise computationally-resistant security level employing quantum-resistant cryptographic techniques, or the security level may be non-quantum-resistant employing classic cryptography. For example, a security level may be applied based on a policy associated with a security attribute, with an aspect of the communication between network identities, with a connection path between network identities, an assessment of overall security, a performance effect, a user service agreement, or other security factors. In an embodiment, a security level may be applied based on a policy associated with a security attribute. For example, a quantum-resistant security level may be employed when a security attribute is a "privileged" privilege level. In another example, a quantum-resistant security level may be employed when a FedRAMP compliance certificate is determined. In yet another example, a classic cryptographic security level may be determined when a protocol cipher suite associated with one of the network environments or the network identities does not support a quantum-resistant security level.

In other embodiments, the security level may be determined by assessing one or more aspects associated with a recordability of a communication. A recordability of a communication may refer to an ability for a malicious actor to intercept or listen in on the communication. For example, a network connection between a client and gateway over the internet may be a recordable communication, whereas a gateway within a client's network, for example with a LAN, may not be a recordable communication. In an example, determining a security level based on one or more aspects associated with a recordability of a communication may include applying a quantum-resistant security level when the communication is recordable and applying classic cryptography when the communication is not recordable. Of course, classic cryptography may be applied when the communication is recordable and a quantum-resistant security level may be applied when the communication is not recordable.

In other embodiments, the security level may be determined by assessing a connection path between a first network identity and a second network identity for security vulnerabilities. For example, determining the security level may include considering whether a network connection is made over a public network, a VPN, or a LAN. In another embodiment, the security level may include assessing a quantity of data associated with the request to access the second network identity. For example, a security level supporting classic cryptography may be employed when relatively large quantities of data are transmitted to avoid the increased computing power and costs of employing quantum-resistant techniques for large quantities of data. Alternatively, when relatively small quantities of data are transmitted, a quantum-resistant security level may be used.

In another embodiment, the secure tunnel security level may be dynamically determined based on a network performance criterion. A network performance criterion may refer to metrics used to evaluate and monitor the effectiveness and quality of a network. For example, criteria may be established for elements of network performance such as bandwidth, latency, throughput, jitter, packet loss, error rate. A secure tunnel security level may be dynamically determined by assessing an element of network performance against a performance criterion. For example, a quantum-resistant security level may be determined if implementing one would not cause network performance bandwidth or latency to drop below a specified threshold.

In another embodiment, the secure tunnel security level may be dynamically determined based on one or more pre-defined terms associated with the first network identity. For example, a pre-defined term may be an agreement with a cybersecurity provider to supply a quantum-resistant security level based on an account, privilege level, network, or network identity.

In an embodiment, a security level may be determined by applying weights to one or more factors. For example, weights may be applied to one or more security attributes, one or more aspects associated with a recordability of a communication, a connection path, a network performance criterion, or one or more predefined terms associated with the first network identity. The security level may be determined dynamically, just-in-time, at the time the connection request is made. In doing so, the security level may be determined in real time at the point of the connection request based on one or more of the aforementioned factors. As just one non-limiting example, weights applied to factors affecting a security level may be determined as follows:

| **Client Cryptography Support** | **Is Client - Gateway communication recordable?** | **Is FedRAMP compliance needed?** | **Is the target or target user privileged?** | **JIT Secured Tunnel** |
|---|---|---|---|---|
| PQ cryptography | No | No | No | Classic cryptography |
| PQ cryptography | Yes | No | No | PQ cryptography |
| Classic cryptography | Yes | Yes | Yes | PQ cryptography |
| Classic cryptography | Yes | No | No | Classic cryptography |
| Classic cryptography | No | Yes | Yes | PQ cryptography |

As will be apparent to one of skill in the art, this is just one example determination and other determinations, weights, and factors may be applied to determine a security level.

In some embodiments, determining the security level may include dynamically determining the security level using a machine learning model. For example, machine learning algorithms may be applied to weigh one or more of the aforementioned factors to determine, just-in-time, a security level for a secure tunnel. Consistent with the disclosed embodiments, process 300 may include inputting semantic data (or session data) and context data into a machine learning model. In some embodiments, the machine learning model may be a trained model, and the trained model may be a large language model configured to perform natural language processing (NLP) tasks and generate text outputs. A trained model may include a generalized or publicly available LLM, such as ChatGPT^{™}, Gemini^{™}, Llama^{™}, Claude^{™}, or the like. Alternatively or additionally, the trained model may be a dedicated model developed for determining a security level. Accordingly, the trained model may have been trained using a large volume of text applicable to system environment 100. In some embodiments, the model is pretrained. Further, in some embodiments the model is periodically or continuously trained during operation.

In some embodiments, the trained model may be at least partially trained for performing functions associated with system environment 100. For example, the trained model may include a generalized or publicly available LLM, as described above, that has been fine-tuned for performing tasks for dynamically reviewing managed session activity. For example, this may include inputting additional domain-specific labeled training data into a preexisting LLM to fine-tune the model. Alternatively or additionally, the trained model may include a model trained without any use of a preexisting model. For example, this may include inputting training data into a machine learning algorithm as part of a training process. The training data may include semantic data and/or context data and may have been labeled to indicate whether one or more security levels should be determined. As a result, a trained model may be developed to assess whether various security levels should be determined based on the aforementioned factors.

In some embodiments, a trained model may be continuously fed with audits and feedback from previous instances of determining a security level to improve its performance and validity by adding context from the various sensors. For example, various feedback loops may be implemented to feed data back to a model database for training and fine-tuning the trained model. While a LLM is used by way of example, a trained model may include various other forms of machine learning models, such as a logistic regression, a linear regression, a random forest, a K-Nearest Neighbor (KNN) model, a K-Means model, a decision tree, a cox proportional hazards regression model, a Naïve Bayes model, a Support Vector Machines SVM) model, a gradient boosting algorithm, a deep learning model, or any other form of machine learning model or algorithm.

Step 330 of process 300 may include determining a security level for a secure tunnel with a communication component located in a network associated with a second network identity. As shown in Figure 3, the security level may be determined by a component of a device on an intermediate network environment, for example, by network security module 130 operating on computing device 120. In an embodiment, the security level is determined based on at least one security attribute associated with one or more of the first network identity, network environment 302, a second network identity, or network environment 306.

Aspects of the present disclosure may include identifying, just-in-time and based on the security level, the secure tunnel with the communication component located in the network associated with the second network identity resource. In some embodiments, the secure tunnel may be existing or preexisting. In those cases, identifying the secure tunnel may include selecting from one or more existing secure tunnels configured for classic cryptographic techniques or may include selecting from one or more existing secure tunnels configured for quantum-resistant cryptographic techniques. In other embodiments, identifying the secure tunnel may include generating the secure tunnel. Generating a secure tunnel may include creating a secure tunnel configured for either classical or post-quantum cryptography and may include, for example, a VPN or other encryption and encapsulation protocol used to encrypt and transmit data. In other embodiments, identifying the secure tunnel may be performed in accordance with a pre-defined policy associated with a network identity.

At step 340, process 300 may include identifying, just-in-time, a secure network tunnel. In an embodiment, the network tunnel may be identified to facilitate communication between a gateway bridging a network identity in a first network 302 to a second network identity 306 containing a connector client and/or a second network identity. In some embodiments, identifying a secure tunnel may include creating a secure tunnel. At step 350, a network tunnel may be created, for example, between a connector client associated with second network 306 and a connector back-end component of intermediate network 304. In other embodiments, identifying a network tunnel may include selecting an existing network tunnel. Of course, direct connections between a network identity in first network 302 may also be made directly to a second network identity in network 306 without going through intermediate network 304. In an embodiment, the second network identity may support post-quantum cryptography techniques, and the secure tunnel security level is configured for classic cryptography. In other embodiments, the second network identity may support post-quantum cryptography techniques, and the secure tunnel security level is configured for classic cryptography. The choice of the secure tunnel security level may be determined in accordance with one or more security level policies as described herein. The secure tunnel may be established by, for example, secure tunnel module 240.

Aspects of the present disclosure may include establishing a secure connection with the second network identity using the secure tunnel. Establishing a secure connection may generally include an encrypted link between two points, such as a user and a website. In an embodiment, a secure tunnel may be created between a first network identity and a second network identity, for example, between a gateway associated with network 302 and a second network identity operating in network 306.

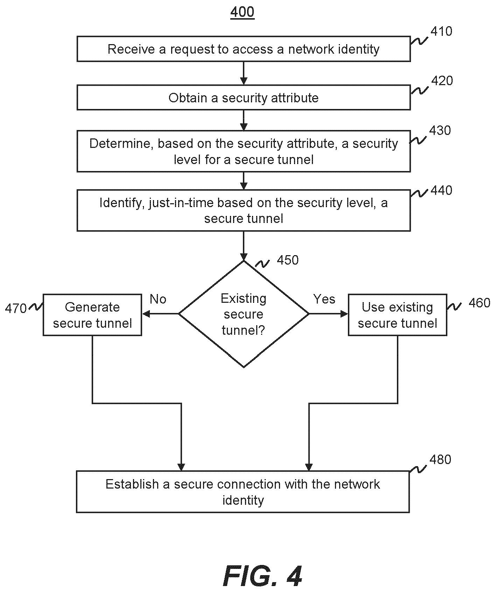

Fig. 4 is flowchart depicting an exemplary process for establishing secure access between network identities in accordance with disclosed embodiments. Process 400 may be similar to process 300 described above. For example, process 400 may be performed by network security module 130, security level module 230, secure tunnel module 240, processor 210, or a combination thereof. Accordingly, any of the various functions or elements described above with respect to process 300 may equally apply to process 400, and vice versa.

Step 410 of process 400 may include receiving a request to access a network identity. Receiving a request to access a network identity may generally correspond with step 310 of process 300.

Step 420 of process 400 may include obtaining a security attribute. Obtaining a security attribute may generally correspond with step 320 of process 300. Step 430 of process 400 may include determining, based on the security attribute, a security level for a secure tunnel. Determining a security level for a secure tunnel may generally correspond with step 330 of process 300.

Step 440 of process 400 may include identifying, just-in-time based on the security level, a secure tunnel between a first network identity and a second network identity. Step 440 of process 400 may generally correspond with steps 340 and/or 350 or process 300. In some embodiments, either as part of step 440 or separately, process 400 may also determine in step 450 whether a secure tunnel already exists. For example, this may involve determining whether a secure tunnel has been created, is currently active, or is on a list of existing tunnels. If a secure tunnel exists, and it is adequate (e.g., would not negatively affect network performance below a pre-determined threshold, a risk level of using a privilege level associated with a user below a pre-determined threshold, or satisfied the determined security level, etc.), it may be used in step 460. If no secure tunnel exists or if the existing secure tunnel does not satisfy a determined policy (i.e., its use would negatively affect network performance below a pre-determined threshold, or as required by a privilege level associated with a user, etc.), process 400 may include generating the secure tunnel at step 470. Generating the secure tunnel in step 470 may include, for example, creating the tunnel, provisioning the tunnel, instantiating the tunnel, etc. At step 480, process 400 may include establishing a secure connection with a second network identity. Step 480 may generally correspond with step 360 of process 300.

It is to be understood that the disclosed embodiments are not necessarily limited in their application to the details of construction and the arrangement of the components and/or methods set forth in the following description and/or illustrated in the drawings and/or the examples. The disclosed embodiments are capable of variations, or of being practiced or carried out in various ways.

The disclosed embodiments may be implemented in a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, mode-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing mode information of the computer readable program instructions to personalize the electronic circuitry, to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus, or other device to produce a computer implemented process, such that the instructions which execute on the computer, other programmable apparatus, or other device implement the functions/acts specified in the flowchart and/or block diagram block or blocks.

The flowcharts and block diagrams in the figures illustrate the architecture, functionality, and operation of possible implementations of systems, methods, and computer program products according to various embodiments of the present invention. In this regard, each block in the flowcharts or block diagrams may represent a software program, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant virtualization platforms, virtualization platform environments, trusted cloud platform resources, cloud-based assets, protocols, communication networks, security tokens and authentication credentials, and code types will be developed, and the scope of these terms is intended to include all such new technologies a priori.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub combination or as suitable in any other described embodiment of the invention. Certain features described in the context of various embodiments are not to be considered essential features of those embodiments unless the embodiment is inoperative without those elements.

Although the invention has been described in conjunction with specific embodiments thereof, it is evident that many alternatives, modifications, and variations will be apparent to those skilled in the art. Accordingly, it is intended to embrace all such alternatives, modifications and variations that fall within the broad scope of the appended claims.

Also disclosed herein are the following clauses:
Clause 1. A non-transitory computer readable medium including instructions that, when executed by at least one processor, cause the at least one processor to perform operations for establishing secure access between network identities, the operations comprising:
   receiving, from a first network identity, a request to access a second network identity;
   obtaining at least one security attribute associated with at least one of: the first network identity, the second network identity, a network environment associated with the first network identity, or a network environment associated with the second network identity;
   determining, based on the at least one security attribute, a security level for a secure tunnel with a communication component located in a network associated with the second network identity;
   identifying, just-in-time and based on the security level, the secure tunnel with the communication component located in the network associated with the second network identity resource; and
   establishing a secure connection with the second network identity using the secure tunnel.
Clause 2. The non-transitory computer readable medium of clause 1, wherein identifying the secure tunnel includes generating the secure tunnel.
Clause 3. The non-transitory computer readable medium of clause 1, wherein identifying the secure tunnel includes selecting a pre-existing secure tunnel.
Clause 4. The non-transitory computer readable medium of clause 1, wherein the at least one security attribute includes at least one protocol cipher suite.
Clause 5. The non-transitory computer readable medium of clause 1, wherein the at least one security attribute includes a compliance certificate.
Clause 6. The non-transitory computer readable medium of clause 1, wherein the at least one security attribute includes a privilege level.
Clause 7. The non-transitory computer readable medium of clause 1, wherein the determined security level is a quantum-resistant security level.
Clause 8. The non-transitory computer readable medium of clause 1, wherein determining the security level includes assessing one or more aspects associated with a recordability of a communication from the first network identity.
Clause 9. The non-transitory computer readable medium of clause 1, wherein determining the security level includes assessing a connection path from the first network identity to the second network identity for security vulnerabilities.
Clause 10. The non-transitory computer readable medium of clause 1, wherein determining the security level includes assessing a quantity of data associated with the request to access the second network identity.
Clause 11. The non-transitory computer readable medium of clause 1, wherein determining the security level includes dynamically determining the security level using a machine learning model.
Clause 12. The non-transitory computer readable medium of clause 1, wherein identifying the secure tunnel is performed in accordance with a pre-defined policy.
Clause 13. The non-transitory computer readable medium of clause 1, wherein a secure tunnel is a secure connection that allows data to travel safely between two points over a network.
Clause 14. A computer-implemented method for establishing secure access to computer network resources, the method comprising:
   receiving, from a first network identity, a request to access a second network identity;
   obtaining at least one security attribute associated with at least one of: the first network identity, the second network identity, a network environment associated with the first network identity, or a network environment associated with the second network identity;
   determining, based on the at least one security attribute, a security level for a secure tunnel with a communication component located in a network associated with the second network identity;
   identifying, just-in-time and based on the security level, the secure tunnel with the communication component located in the network associated with the second network identity resource; and
   establishing a secure connection with the second network identity using the secure tunnel.
Clause 15. The computer-implemented method of clause 14, wherein the request to access the second network identity is performed using one of a TCP connection or a UDP connection.
Clause 16. The computer-implemented method of clause 14, wherein the second network identity supports post-quantum cryptography techniques, and the secure tunnel security level is configured for classic cryptography.
Clause 17. The computer-implemented method of clause 14, wherein the second network identity supports classic cryptography techniques, and the secure tunnel security level is configured for post quantum cryptography.
Clause 18. The computer-implemented method of clause 14, wherein the secure tunnel security level is dynamically determined based on a network performance criterion.
Clause 19. The computer-implemented method of clause 14, wherein the secure tunnel security level is dynamically determined based on one or more pre-defined terms associated with the first network identity.
Clause 20. The computer-implemented method of clause 14, wherein one or more security attributes includes at least one of a protocol cipher suite, a compliance certificate, or a privilege level.
Clause 21. The computer-implemented method of clause 14, wherein determining the security level includes dynamically determining the security level using a machine learning model.
Clause 22. A computer-implemented method for establishing secure access between network identities, the method comprising:
   receiving, from a first network identity, a request to access a second network identity;
   obtaining at least one security attribute associated with at least one of: the first network identity, the second network identity, a network environment associated with the first network identity, or a network environment associated with the second network identity;
   determining, based on the at least one security attribute, a security level for a secure tunnel with a communication component located in a network associated with the second network identity;
   identifying, just-in-time and based on the security level, the secure tunnel with the communication component located in the network associated with the second network identity resource; and
   establishing a secure connection with the second network identity using the secure tunnel.
Clause 23. The computer-implemented method of clause 22, wherein the request to access the second network identity is performed using one of a TCP connection or a UDP connection.
Clause 24. The computer-implemented method of clause 22 or 23, wherein the second network identity supports post-quantum cryptography techniques, and the secure tunnel security level is configured for classic cryptography.
Clause 25. The computer-implemented method of any one of clauses 22 to 24, wherein the second network identity supports classic cryptography techniques, and the secure tunnel security level is configured for post quantum cryptography.
Clause 26. The computer-implemented method of any one of clauses 22 to 25, wherein the secure tunnel security level is dynamically determined based on a network performance criterion.
Clause 27. The computer-implemented method of any one of claims clauses 22 to 26, wherein the secure tunnel security level is dynamically determined based on one or more pre-defined terms associated with the first network identity.
Clause 28. The computer-implemented method of any one of clauses 22 to 27, wherein identifying the secure tunnel includes generating the secure tunnel or selecting a pre-existing secure tunnel.
Clause 29. The computer-implemented method of any one of clauses 22 to 28, wherein one or more security attributes includes at least one of a protocol cipher suite, a compliance certificate, or a privilege level.
Clause 30. The computer-implemented method of any one of clauses 22 to 29, wherein determining the security level includes dynamically determining the security level using a machine learning model.
Clause 31. The computer-implemented method of any one of clauses 22 to 30, wherein the determined security level is a quantum-resistant security level.
Clause 32. The computer-implemented method of any one of clauses 22 to 31, wherein determining the security level includes assessing one or more aspects associated with a recordability of a communication from the first network identity.
Clause 33. The computer-implemented method of any one of clauses 22 to 32, wherein determining the security level includes assessing a connection path from the first network identity to the second network identity for security vulnerabilities.
Clause 34. The computer-implemented method of any one of clauses 22 to 33, wherein determining the security level includes assessing a quantity of data associated with the request to access the second network identity.
Clause 35. The computer-implemented method of any one of clauses 22 to 34, wherein identifying the secure tunnel is performed in accordance with a pre-defined policy.
Clause 36. A computer readable medium including instructions that, when executed by at least one processor of a system, cause the system to perform the method of any one of clauses 22 to 35.
Clause 37. A computer system comprising:
   at least one processor; and
   memory storing instructions that, when executed by the at least one processor, cause the system to perform the method of any one of clauses 22 to 35.

## Claims

1. A computer-implemented method for establishing secure access between network identities, the method comprising:
receiving, from a first network identity, a request to access a second network identity;
obtaining at least one security attribute associated with at least one of: the first network identity, the second network identity, a network environment associated with the first network identity, or a network environment associated with the second network identity;
determining, based on the at least one security attribute, a security level for a secure tunnel with a communication component located in a network associated with the second network identity;
identifying, just-in-time and based on the security level, the secure tunnel with the communication component located in the network associated with the second network identity resource; and
establishing a secure connection with the second network identity using the secure tunnel.

2. The computer-implemented method of claim 1, wherein the request to access the second network identity is performed using one of a TCP connection or a UDP connection.

3. The computer-implemented method of claim 1 or 2, wherein the second network identity supports post-quantum cryptography techniques, and the secure tunnel security level is configured for classic cryptography.

4. The computer-implemented method of any one of claims 1 to 3, wherein the second network identity supports classic cryptography techniques, and the secure tunnel security level is configured for post quantum cryptography.

5. The computer-implemented method of any one of claims 1 to 4, wherein the secure tunnel security level is dynamically determined based on a network performance criterion.

6. The computer-implemented method of any one of claims 1 to 5, wherein the secure tunnel security level is dynamically determined based on one or more pre-defined terms associated with the first network identity.

7. The computer-implemented method of any one of claims 1 to 6, wherein identifying the secure tunnel includes generating the secure tunnel or selecting a pre-existing secure tunnel.

8. The computer-implemented method of any one of claims 1 to 7, wherein one or more security attributes includes at least one of a protocol cipher suite, a compliance certificate, or a privilege level.

9. The computer-implemented method of any one of claims 1 to 7, wherein determining the security level includes dynamically determining the security level using a machine learning model.

10. The computer-implemented method of any one of claims 1 to 9, wherein the determined security level is a quantum-resistant security level.

11. The computer-implemented method of any one of claims 1 to 10, wherein determining the security level includes assessing one or more aspects associated with a recordability of a communication from the first network identity.

12. The computer-implemented method of any one of claims 1 to 11, wherein determining the security level includes assessing a connection path from the first network identity to the second network identity for security vulnerabilities.

13. The computer-implemented method of any one of claims 1 to 12, wherein determining the security level includes assessing a quantity of data associated with the request to access the second network identity.

14. The computer-implemented method of any one of claims 1 to 13, wherein identifying the secure tunnel is performed in accordance with a pre-defined policy.

15. A computer readable medium including instructions that, when executed by at least one processor of a system, cause the system to perform the method of any one of claims 1 to 14.
